# EUROPEAN PATENT APPLICATION

(11) **EP 4 280 227 A1**
(43) Date of publication of application: **22.11.2023**
(21) Application number: 22748792.3
(22) Date of filing: 05.01.2022
(51) Int. Cl.: G21C 7/103, G21C 7/10, G21C 7/11

(54) **CONTROL ROD ABSORBER ASSEMBLY, CONTROL ROD AND CONTROL ROD ASSEMBLY**

(30) Priority: 08.02.2021 CN 202110170970
(71) Applicant: China Nuclear Power Technology Research Institute Co., Ltd, Shenzhen, Guangdong 518031 (CN); China General Nuclear Power Corporation, Shenzhen, Guangdong 518028 (CN); China Nuclear Power Engineering Company Ltd., Shenzen, Gaungdong 518000 (CN); CGN Power Co., Ltd., Shenzen, Guangdong 518028 (CN)
(72) Inventor: XUE, Zhe, Shenzhen, Guangdong 518031 (CN); PANG, Zhengzheng, Shenzhen, Guangdong 518031 (CN); LI, Weicai, Shenzhen, Guangdong 518031 (CN)
(74) Representative: Westphal, Mussgnug & Partner, Patentanwälte mbB
(86) International application number: PCT/CN2022/070364
(87) International publication number: WO 2022/166513

(57) **Abstract**

A control rod absorber assembly (1), a control rod (3) and a control rod assembly. The control rod absorber assembly (1) comprises a first absorber (11), a second absorber (12) and a stress transmission assembly (13), wherein the stress transmission assembly (13) is arranged around the periphery of the second absorber (12) and forms a stress combination together with the second absorber (12), and a receding space (2) for accommodating the second absorber (12) when the second absorber expands in a radial direction is provided between the stress transmission assembly (13) and the periphery of the second absorber (12); and the first absorber (11) and the stress combination are configured to be mounted in a cladding tube (31) of a control rod (3), the first absorber (11) and the stress combination are arranged in an axial direction of the cladding tube (31),and the first absorber (11) is located above the stress combination and is configured for pressing the stress combination downwards. By arranging the stress transmission assembly (13), the second absorber (12) does not bear the action of gravity of the first absorber (11), so as to reduce compression creep of the second absorber (12); and when the second absorber (12) absorbs neutrons and expands in the radial direction, an expanded portion can be accommodated in a receding space (2), so as to prevent a cladding tube (31) from being damaged.

## Description

### FIELD OF THE INVENTION

The present invention relates to the field of control rod absorber technology and, more specifically, to a control rod absorber assembly, a control rod and a control rod assembly.

### DESCRIPTION OF THE RELATED ART

An existing pressurized water reactor control rod consists of an absorber, a cladding tube, a first end plug, a second end plug, and a second compression spring. When the control rod is in use, the volume of the absorber will be increased due to the absorption of neutrons by the absorber in the section having a high neutron flow density, especially in the lower section of the control rod. At the same time, the pressure of the second compression spring on the absorber inside the control rod will cause compression creep of the absorber. Under the above two effects, the gap between the absorber and the cladding tube will be gradually narrowed, which may cause the cladding tube to expand, and in serious cases, may affect smooth downward insertion of the control rod or damage the cladding tube.

### SUMMARY OF THE INVENTION

The technical problem to be solved by the present invention is to provide an improved control rod absorber assembly, control rod and control rod assembly.

The technical solution adopted by the present invention to solve its technical problem is: constructing a control rod absorber assembly including a first absorber, a second absorber and a stress transfer assembly;

the stress transfer assembly is disposed around an outer periphery of the second absorber and forms a stress assemblage with the second absorber, the stress transfer assembly and the outer periphery of the second absorber form an avoidance space therebetween for accommodating the second absorber when undergoing an expansion in a radial direction;

the first absorber and the stress assemblage are configured to be installed in a cladding tube of a control rod, the first absorber and the stress assemblage are arranged along an axial direction of the cladding tube, and the first absorber is located above the stress assemblage and configured for downwardly pressing the stress assemblage.

Preferably, the stress transfer assembly comprises a first stress member and a second stress member respectively corresponding to two ends of the second absorber, and a connecting portion, with a second end of the connecting portion being connected to the second stress member to form an accommodating chamber for accommodating the second absorber, and the first stress member being connected to a first end of the connecting portion to close an opening of the accommodating chamber.

Preferably, an axial length of the accommodating chamber is equal to an axial length of the second absorber, and the two ends of the second absorber are respectively abutted against the first stress member and second stress member.

Preferably, an axial length of the accommodating chamber is greater than an axial length of the second absorber, the accommodating chamber is provided therein with a first compression spring, the first compression spring is provided between the first stress member and the second absorber for compressing the second absorber and forming an expansion space for the second absorber to undergo an axial expansion.

Preferably, the connecting portion is provided in the form of a hollow cylindrical structure, an inner diameter of the connecting portion is greater than a radial size of the second absorber, and a gap between the connecting portion and the second absorber forms the avoidance space.

Preferably, the connecting portion comprises a plurality of connecting rods, each of the connecting rods is arranged in a circumferential direction of the second absorber, two adjacent connecting rods spaced apart from each other, and a gap between the two adjacent connecting rods forms the avoidance space; and/or
the connecting portion comprises a plurality of connecting rods, each of the connecting rod is arranged in a circumferential direction of the second absorber, each of the connecting rods is spaced apart from the second absorber, a gap between each of the connecting rods and the second absorber forms the avoidance space.

Preferably, the connecting rods are parallel to each other, and each of the connecting rods is perpendicular to the first stress member and the second stress member; or
the connecting rods are intersected with each other and are arranged in a grid pattern.

Preferably, the two adjacent connecting rods are arranged at the same interval.

Preferably, at least one of the first stress member, the second stress member, and the connecting portion is provided with an accommodating portion for accommodating gas and/or accommodating an expanded portion of the second absorber.

Preferably, at least one of the first stress member and the second stress member is provided with an accommodating portion for accommodating gas and/or accommodating an expanded portion of the second absorber.

Preferably, the accommodating portion comprises one or more openings, the openings in the first stress member and the second stress member have a size less than a radial size of the second absorber.

Preferably, when the accommodating portion comprises multiple openings, the multiple openings are arranged at uniform intervals.

Preferably, the first stress member, the second stress member, and the connecting portion are made of stainless steel, and the connecting portion is welded to the first stress member and the second stress member, respectively.

Preferably, the first absorber and the second absorber are each a continuously arranged absorbing rod; or
the first absorber and the second absorber are each an absorbing rod formed by a number of split rods arranged axially; or
the first absorber and the second absorber are each an absorbing column formed by a number of pellets stacked axially.

The present invention further provides a control rod, which comprises a cladding tube, a first end plug, a second end plug, a second compression spring, and a control rod absorber assembly according to any one of the above;
the control rod absorber assembly is provided in the cladding tube, and the first absorber and the cladding tube form an expansion gap therebetween in the radial direction, the first end plug and the second end plug hermetically seal the two ends of the cladding tube, and the second compression spring is provided between the first end plug and the first absorber, such that the first absorber is in abutting contact with the stress transfer assembly and the stress transfer assembly is in contact with the second end plug.

Preferably, the stress transfer assembly is provided in close contact with the second end plug.

The present invention further provides a control rod assembly, which comprises a plurality of control rods, at least one of the plurality of control rods employing the control rod as described above.

Implementing the control rod absorber assembly of the present invention has the following beneficial effects: when the first absorber, the stress assemblage is axially mounted in the cladding tube of the control rod and the first absorber is located above the stress assemblage, the first absorber will downwardly press the stress assemblage, and at this time, the stress transfer assembly bears the gravity of the first absorber and transfers the gravity, so that the second absorber does not bear the gravity of the first absorber, thereby reducing the compression creep of the second absorber; in addition, when the second absorber absorbs neutrons and undergoes a radial expansion, the expanded portion may be accommodated in the avoidance space, thereby preventing damage to the cladding tube.

Implementing the control rod of the present invention has the following beneficial effect: the first absorber is in abutting contact with the stress transfer assembly under the tension of the second compression spring, and the stress transfer assembly transfers the gravity and compression stress of the first absorber to the second end plug, so that the second absorber is not subjected to the gravity and compression stress of the first absorber.

Implementing the control rod assembly of the present invention has the following beneficial effect: by setting the control rod of the present invention, the control rod assembly can effectively avoid damage to the cladding tube and ensure the smooth downward insertion of the control rod.

### BRIEF DESCRIPTION OF THE DRAWINGS

The present invention will be further described below in conjunction with the accompanying drawings and embodiments. In the drawings:
Fig. 1 is a schematic diagram showing a structure of a control rod absorber assembly according to a first embodiment of the present invention;
Fig. 2 is a schematic diagram showing a structure of a control rod absorber assembly according to a second embodiment of the present invention;
Fig. 3 is a schematic diagram showing a structure of a control rod according to the first embodiment of the present invention;
Fig. 4 is a schematic diagram showing a structure of a control rod according to the second embodiment of the present invention;
Fig. 5 is a partially enlarged view of portion A in Fig. 1;
Fig. 6 is a partially enlarged view of portion B in Fig. 2;
Fig. 7 is a partially enlarged view of portion C in Fig. 3.

In the drawings, 1. Control Rod Absorber Assembly, 11. First Absorber, 12. Second Absorber, 13. Stress Transfer Assembly, 131. First Stress Member, 132. Second Stress Member, 133. Connecting Portion, 1331. Connecting rod, 14. Opening, 2. Avoidance Space, 3. Control Rod, 31. Cladding Tube, 32. First End Plug, 33. Second End Plug, 34. Second Compression Spring, 35. Expansion Gap.

### DETAILED DESCRIPTION OF EMBODIMENTS

The technical solutions in the embodiments of the present invention will be described clearly and completely in the following in conjunction with the accompanying drawings in the embodiments of the present invention. Apparently, the described embodiments are merely part of but not all embodiments of the present invention. Based on the embodiments described in the present invention, all other embodiments obtained by one of ordinary skill in the art without making creative efforts fall within the scope of protection of the present invention.

The control rod absorber assembly 1 of the present invention can be mounted in a cladding tube 31 of a control rod 3, for absorbing neutrons in a nuclear reactor, which controls the reaction rate of the nuclear reactor by controlling the amount of the neutrons involved in the fission reaction. It is known from the prior art that the expansion of a lower section of the absorber is more obvious when the absorber absorbs neutrons because the gravity and/or compressive stress of the upper absorber section to which the lower section of the absorber is subjected are greater than those of the upper section of the absorber. In the present invention, the compression creep of the lower section of the absorber is reduced by reducing the gravity and compressive stress of the upper absorber section to which the lower section of the absorber is subjected, thereby reducing the expansion of the lower section of the absorber.

In the present invention, the control rod absorber assembly 1 includes a first absorber 11, a second absorber 12, and a stress transfer assembly 13. The first absorber 11, the second absorber 12, and the stress transfer assembly 13 are provided in a split manner, and the stress transfer assembly 13 may be disposed surrounding an outer periphery of the second absorber 12 and form a stress assemblage with the second absorber 12. An avoidance space 2 is provided between the stress transfer assembly 13 and the outer periphery of the second absorber 12, for accommodating the second absorber 12 when the second absorber 12 expands in the radial direction.

The first absorber 11 and the stress assemblage are adapted to be mounted in the cladding tube 31 of the control rod. The first absorber 11 and the stress assemblage are arranged along an axial direction of the cladding tube 31, and the first absorber 11 is located above the stress assemblage for downwardly pressing the stress assemblage.

It is to be understood that, when the first absorber and the stress assemblage are mounted in the cladding tube of the control rod along the axial direction and the first absorber is located above the stress assemblage, the first absorber will downwardly press the stress assemblage. At this time, the stress transfer assembly bears the gravity of the first absorber and transfers this gravity, such that the second absorber is not subjected to the action of gravity of the first absorber, whereby the compression creep of the second absorber is reduced. In addition, when the second absorber absorbs neutrons and undergoes a radial expansion, the expanded portion of the second absorber may be accommodated in the avoidance space, thereby preventing damage to the cladding tube.

The first absorber 11 and the second absorber 12 are each a continuously arranged absorbing rod; alternatively, the first absorber 11 and the second absorber 12 are each an absorbing rod formed by a plurality of axially-arranged split rods; alternatively, the first absorber 11 and the second absorber 12 are each an absorbing column formed by a plurality of axially-stacked pellets.

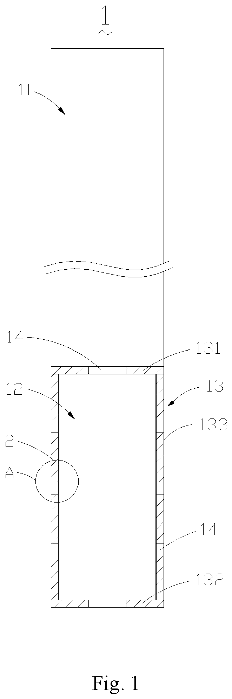

Fig. 1 is a schematic diagram showing a structure of a control rod absorber assembly according to a first embodiment of the present invention. As shown in Fig. 1, the stress transfer assembly 13 includes a first stress member 131, a second stress member 132, and a connecting portion 133. The first stress member 131 and the second stress member 132 correspond respectively to two ends of the second absorber 12, the connecting portion 133 is used to enclose the outer periphery of the second absorber 12, and two ends of the connecting portion 133 are respectively connected to the first stress member 131 and the second stress member 132 to form the complete stress transfer assembly 13.

In specific implementation, a second end of the connecting portion 133 is connected to the second stress member 132 to form an accommodating chamber for accommodating the second absorber 12. By mounting the second absorber 12 in the accommodating chamber, and then connecting the first stress member 131 to a first end of the connecting portion 133 to close the opening of the accommodating chamber, it can be realized that the stress transfer assembly 13 encloses the entire second absorber 12 along the outer periphery of the second absorber 12, thereby forming the stress assemblage.

To facilitate mounting of the stress transfer assembly 13, the first stress member 131 and the second stress member 132 are preferably provided in a plate shape, and the shape of the first stress member 131 and the second stress member 132 are adapted to a cross-section of the second absorber 12, i.e., the first stress member 131 and the second stress member 132 may be provided in the shape of a circular plate, and the connecting portion 133 may be provided in the form of a hollow cylindrical structure. Optionally, the first stress member 131, the second stress member 132 and the connecting portion 133 may be made of stainless steel, and the connection between the connecting portion 133 and the first stress member 131, and between the connecting portion 133 and the second stress member 132 may be realized by means of welding. It is to be understood that the three may also be made of other materials that are of high strength and that contribute to heat transfer.

In order to prevent displacement of the second absorber 12 in the cladding tube 31, the axial length of the connecting portion 133 is equal to the axial length of the second absorber 12, i.e., the axial length of the accommodating chamber is equal to the axial length of the second absorber 12. Thus, when the stress transfer assembly 13 is disposed surrounding the second absorber 12 from all around, the two ends of the second absorber 12 abut against the first stress member 131 and the second stress member 132, respectively. It will be appreciated that the first absorber 11 may be provided above the first stress member 131 or the second stress member 132 of the stress transfer assembly 13, for abutting the corresponding stress member. For ease of description, in this embodiment the first absorber 11 is illustrated as being provided above the first stress member 131 for abutting the first stress member 131.

Alternatively, the axial length of the connecting portion 133 is greater than the axial length of the second absorber 12, i.e., the axial length of the accommodating chamber is greater than the axial length of the second absorber 12, and a first compression spring is provided in the accommodating chamber. Specifically, when the second absorber 12 is mounted in the stress transfer assembly 13, the first compression spring is provided between the first stress member 131 and the second absorber 12 for pressing the second absorber 12, thereby preventing displacement of the second absorber 12. At the same time, the first compression spring is disposed between the first stress member 131 and the second absorber 12 to form an expansion space, which can accommodate the axial expansion of the second absorber 12 that occurs after the second absorber 12 absorbs neutrons. It will be appreciated that the first compression spring may also be provided between the second stress member 132 and the second absorber 12.

It is to be understood that in this embodiment, the first compression spring is disposed within the stress transfer assembly 13, and the force to which the second absorber 12 is subjected includes only the compression force from the first compression spring, whereas the force to which the lower section of the absorber is subjected in the prior art includes the gravitational force of the upper section of the absorber and the compression stress, and therefore the second absorber 12 in the present invention is subjected to a smaller force than the force to which the lower section of the absorber is subjected in the prior art, thereby achieving a reduction in the force to which it is subj ected.

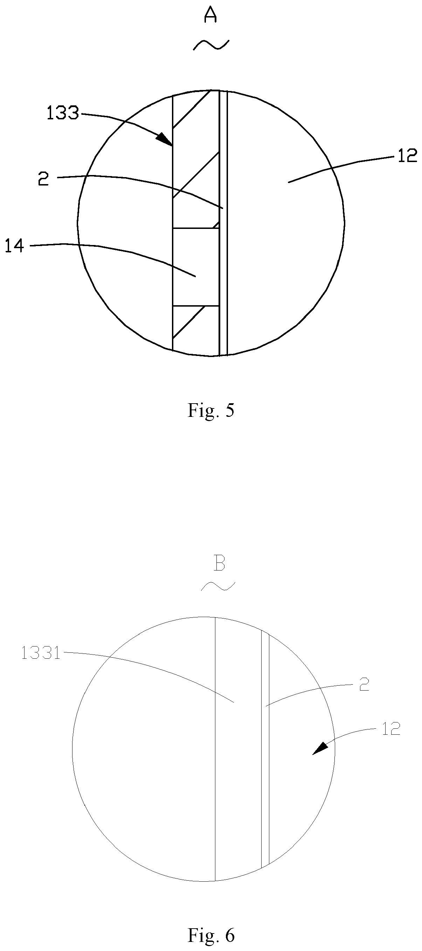

In order to accommodate the expanded portion of the second absorber 12 that undergoes radial expansion after absorbing neutrons, so as to prevent damage to the cladding tube 31, the stress transfer assembly 13 is provided with the accommodating space 2. Specifically, as shown in Figs. 1 and 5, the connecting portion 133 is provided as a hollow cylindrical structure, and an inner diameter of the connecting portion 133 is greater than the radial size of the second absorber 12, so that the accommodating space 2 is formed by a gap between the two. When the second absorber 12 undergoes radial expansion, the expanded portion may be accommodated in the accommodating space 2.

It is to be understood that the second absorber 12 generates gas when absorbing neutrons. In this embodiment, at least one of the first stress member 131, the second stress member 132, and the connecting portion 133 is provided with a receiving portion, which can be used to receive the gas in order to increase the receiving area for the gas. The receiving portion includes one or more openings 14 that are each opened through the corresponding part. Preferably, when the receiving portion includes multiple openings 14, the multiple openings 14 are arranged at even intervals. It will be appreciated that the size of each opening 14 on the first stress member 131 and the second stress member 132 is smaller than the radial size of the second absorber 12 to prevent the second absorber 12 from passing through the opening 14.

The opening 14 may be provided in any shape such as in the shape of a hole or a strip, etc., and the opening 14 may be provided in a large size or a small size. It will be appreciated that when the opening 14 is provided in a large size, the opening 14 may accommodate the expanded portion of the second absorber 12, or may accommodate both the gas as well as the expanded portion of the second absorber 12. When the opening 14 is provided in a small size, the opening 14 may accommodate the gas. It is to be understood that the large size and the small size of the opening 14 are relative to each other, and the values or ranges of values of the large size and the small size are common knowledge to those skilled in the art, and will not be discussed in detail herein.

Further, when the receiving portion includes multiple openings 14, the multiple openings 14 may include both the large-size openings and small-size openings which may be alternatingly arranged.

Optionally, in a specific embodiment, as shown in Fig. 1, the axial length of the connecting portion 133 is equal to the axial length of the second absorber 12, and the receiving portion is provided on each of the first stress member 131, the second stress member 132, and the connecting portion 133. The receiving portion on each of the first stress member 131 and the second stress member 132 includes one opening 14 which has a large size and is centrally located in the first stress member 131 and the second stress member 132, for accommodating the gas while allowing for axial expansion of the second absorber 12. The receiving portion on the connecting portion 133 includes multiple openings 14 which have a small size and are arranged at even intervals, for accommodating the gas through such openings 14 while allowing for radial expansion of the second absorber 12 through the avoidance space 2. It will be appreciated that the small size arrangement of the openings 14 on the connecting portion 133 ensures the strength of the stress transfer assembly 13.

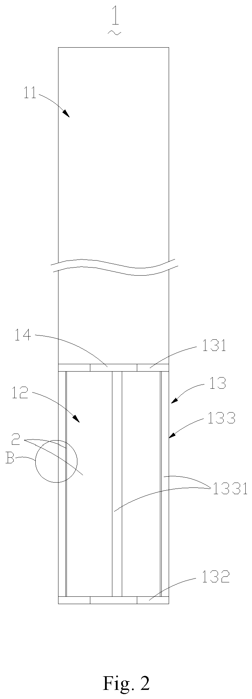

Fig. 2 is a schematic diagram showing a structure of a control rod absorber assembly of a second embodiment of the present invention. As shown in Figs. 2 and 6, this embodiment differs from the first embodiment in that the connecting portion 133 in this embodiment includes a plurality of connecting rods 1331, the connecting rods 1331 are each arranged along a circumferential direction of the second absorber 12, two neighboring connecting rods 1331 are spacingly arranged, a gap between the two neighboring connecting rods 1331 forms an avoidance space 2, and an expanded portion of the second absorber 12 undergoing a radial expansion can be accommodated in the avoidance space 2,; and/or,

The connecting portion 133 includes a plurality of connecting rods 1331, the connecting rods 1331 are each arranged along a circumferential direction of the second absorber 12, each connecting rod 1331 is spaced apart from the second absorber 12, and a gap between each connecting rod 1331 and the second absorber 12 forms an avoidance space 2. Specifically, the stress transfer assembly 13, the first stress member 131 and the second stress member 132 may have a size greater than the radial size of the second absorber 12, and the connecting rods 1331 are each arranged along a circumferential direction of the second stress member 132 and connected to an edge of the second stress member 132, such that the radial size of the formed accommodating chamber is larger than the radial size of the second absorber 12, thereby forming the avoidance space 2. As such, when the second absorber 12 is mounted into the stress transfer assembly 13, the connecting rods 1331 are spaced a distance from the second absorber 12, which serves to increase the avoidance space 2.

The multiple connecting rods 1331 are disposed parallel to each other and are each perpendicular to the first stress member 131 and the second stress member 132, to facilitate accommodating the expanded portion of the second absorber 12. Alternatively, the multiple connecting rods 1331 are intersected with each other and arranged in a grid pattern, which is advantageous in enhancing the overall strength of the stress transfer assembly 13.

Preferably, the multiple connecting rods 1331 are arranged equidistantly to accommodate the expanded portions at various locations in the circumferential direction.

In this embodiment, the accommodating portion is provided on at least one of the first stress member 131 and the second stress member 132. The receiving portion may be used to accommodate the gas and/or to accommodate the expanded portion of the second absorber 12. The receiving portion is the same as the receiving portion of the above embodiments. When the opening 14 of the receiving portion is provided with a large size, the opening 14 may accommodate the expanded portion of the second absorber 12, or may accommodate the gas as well as the expanded portion of the second absorber 12; when the opening 14 is provided with a small size, the opening 14 may accommodate the gas.

Optionally, in a specific embodiment, as shown in Fig. 2, the connecting portion 133 includes four connecting rods 1331, the length of the connecting rods 1331 is equal to the axial length of the second absorber 12, such that the axial length of the formed accommodating chamber is equal to the axial length of the second absorber 12. The four connecting rods 1331 are spaced at even intervals, which saves material while ensuring the strength of the stress transfer assembly 13; the receiving portion is provided on both the first stress member 131 and the second stress member 132, and the receiving portion includes one opening 14 which is provided with a large size and is located centrally in the first stress member 131 and the second stress member 132, for accommodating the gas while allowing for axial expansion of the second absorber 12.

In the control rod absorber assembly 1 of the first embodiment and the second embodiment of the present invention, the stress assemblage is formed by the stress transfer assembly 13 surrounding the second absorber 12; when the first absorber 11 and the stress assemblage are axially installed in the cladding tube 31 of the control rod 3, and the first absorber 11 is located above the stress assemblage, the first absorber 11 will downwardly press on the stress assemblage, and at this time, the stress transfer assembly 13 bears the gravity of the first absorber 11 and transfers the gravity, so that the second absorbing body 12 does not bear the action of the gravity of the first absorber 11, thereby reducing the compression creep of the second absorber 12, and thus achieving the purpose of reducing the expansion of the second absorber 12. In addition, when the second absorber 12 undergoes radial expansion upon absorbing neutrons, the portion of the second absorber 12 that undergoes expansion may be accommodated in the avoidance space 2, thereby preventing damage to the cladding tube 31.

The present invention further provides a control rod 3. The control rod 3 in accordance with a first embodiment of the present invention includes the cladding tube 31, the first end plug 32, the second end plug 33, the second compression spring 34, and the control rod absorber assembly 1. The control rod absorber assembly 1 of this embodiment adopts the control rod absorber assembly 1 of the first embodiment described above.

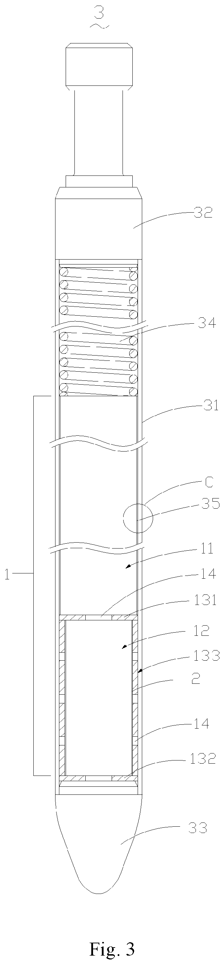

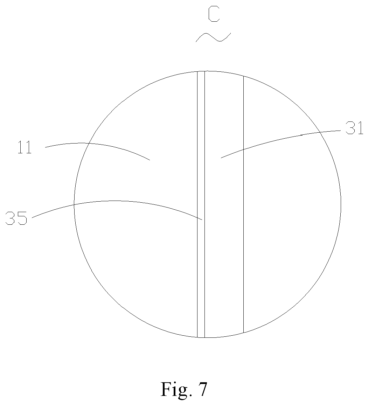

Specifically, as shown in Figs. 3 and 7, the first absorber 11 and the stress assemblage of the control rod absorber assembly 1 are installed in the cladding tube 31, with the first absorber 11 and the stress assemblage arranged along the axial direction of the cladding tube 31, and the first absorber 11 located above the stress assemblage. It will be appreciated that the first absorber 11 and the stress assemblage are discretely provided and, therefore, when installed into the cladding tube 31, the stress assemblage may be first installed in place before the first absorber 11 is installed.

The first end plug 32 and the second end plug 33 are provided to hermetically seal the two ends of the cladding tube 31, wherein the first end plug 32 and the second end plug 33 correspond to the first absorber 11 and the stress assemblage of the control rod absorber assembly 1, respectively. The second compression spring 34 is disposed between the first end plug 32 and the first absorber 11, such that the first absorber 11 is in abutting contact with the stress transfer assembly 13 of the stress assemblage to depress the stress assemblage, and the stress transfer assembly 13 is in contact with the second end plug 33. An expansion gap 35 is provided between the first absorber 11 and the cladding tube 31 in the radial direction, for radial expansion of the first absorber 11.

The outer diameters of the first stress member 131 and the second stress member 132 of the stress transfer assembly 13 are equal to the inner diameter of the cladding tube 31. It will be appreciated that when the control rod absorber assembly 1 is mounted within the cladding tube 31, the stress transfer assembly 13 abuts radially against the cladding tube 31, and the second absorber 12 is located at a lower portion of the cladding tube 31.

For ease of description, the first absorber 11 is illustrated as being in abutting contact with the first stress member 131 of the stress transfer assembly 13, and the second stress member 132 of the stress transfer assembly 13 is illustrated as being in contact with the second end plug 33. Preferably, the stress transfer assembly is in close contact with the second end plug 33 through the second stress member 132.

It is to be understood that, when the first stress member 131 of the stress transfer assembly 13 is subjected to the gravitational and compressive stresses of the first absorber 11, the stresses are transferred through the connecting portion 133 to the second stress member 132, which in turn are transferred to the second end plug 33. That is, the gravitational and compressive stresses of the first absorber 11 are transferred through the stress transfer assembly 13 so that the second absorber 12 is not subjected to the action of the stresses, thereby achieving the purpose of reducing the compression creep of the second absorber 12.

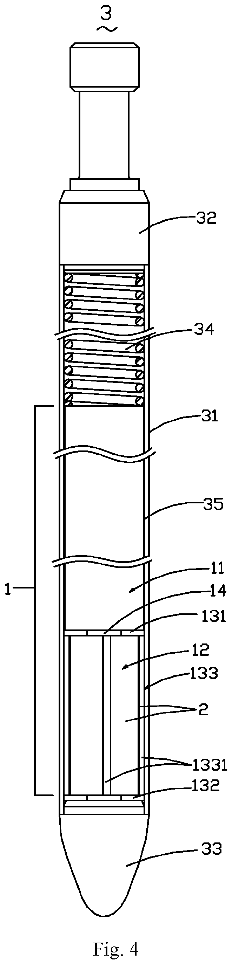

As shown in Fig. 4, a control rod 3 in accordance with a second embodiment of the present invention differs from the control rod 3 of the first embodiment in that, the control rod absorber assembly 1 of this embodiment adopts the control rod absorber assembly 1 of the above-described second embodiment.

In the control rod 3 of the first embodiment and the second embodiment of the present invention, the compressive stress is transferred to the second end plug 33 by the stress transfer assembly 13, so that the second absorber 12 is not subjected to the gravitational force and the compressive stress of the first absorber 11, so as to reduce the compression creep of the second absorber 12 and thus reduce the expansion of the second absorber 12, thus finally achieving the purpose of avoiding damage to the cladding tube 31.

The present invention further provides a control rod assembly, the control rod assembly includes a plurality of control rods, and at least one of the plurality of control rods employs the control rod 3 of the first embodiment or the second embodiment described above.

The above embodiments are only preferred embodiments of the present invention, and their descriptions are relatively specific and detailed, but they should not be construed as a limitation to the patent scope of the invention. It should be noted that, for people of ordinary skill in the art, on the premise of not departing from the concept of the present invention, the technical features described above can be combined, and various deformations and improvements can be further made, which all belong to the protection scope of the present invention. Accordingly, all equivalent transformations and modifications made according to the scope of the claims of the present invention shall fall within the scope of the claims of the present invention.

## Claims

1. A control rod absorber assembly, **characterized in that** it comprises a first absorber (11), a second absorber (12) and a stress transfer assembly (13);
the stress transfer assembly (13) is disposed around an outer periphery of the second absorber (12) and forms a stress assemblage with the second absorber (12), the stress transfer assembly (13) and the outer periphery of the second absorber (12) form an avoidance space (2) therebetween for accommodating the second absorber (12) when undergoing an expansion in a radial direction;
the first absorber (11) and the stress assemblage are configured to be installed in a cladding tube (31) of a control rod (3), the first absorber (11) and the stress assemblage are arranged along an axial direction of the cladding tube (31), and the first absorber (11) is located above the stress assemblage and configured for downwardly pressing the stress assemblage.

2. The control rod absorber assembly according to claim 1, **characterized in that** the stress transfer assembly (13) comprises a first stress member (131) and a second stress member (132) respectively corresponding to two ends of the second absorber (12), and a connecting portion (133), with a second end of the connecting portion (133) being connected to the second stress member (132) to form an accommodating chamber for accommodating the second absorber (12), and the first stress member (131) being connected to a first end of the connecting portion (133) to close an opening of the accommodating chamber.

3. The control rod absorber assembly according to claim 2, **characterized in that** an axial length of the accommodating chamber is equal to an axial length of the second absorber (12), and the two ends of the second absorber (12) are respectively abutted against the first stress member (131) and second stress member (132).

4. The control rod absorber assembly according to claim 2, **characterized in that** an axial length of the accommodating chamber is greater than an axial length of the second absorber (12), the accommodating chamber is provided therein with a first compression spring, the first compression spring is provided between the first stress member (131) and the second absorber (12) for compressing the second absorber (12) and forming an expansion space for the second absorber (12) to undergo an axial expansion.

5. The control rod absorber assembly according to any one of claims 2-4, **characterized in that** the connecting portion (133) is provided in the form of a hollow cylindrical structure, an inner diameter of the connecting portion (133) is greater than a radial size of the second absorber (12), and a gap between the connecting portion (133) and the second absorber (12) forms the avoidance space (2).

6. The control rod absorber assembly according to any one of claims 2-4, **characterized in that** the connecting portion (133) comprises a plurality of connecting rods (1331), each of the connecting rods (1331) is arranged in a circumferential direction of the second absorber (12), two adjacent connecting rods (1331) spaced apart from each other, and a gap between the two adjacent connecting rods (1331) forms the avoidance space (2); and/or
the connecting portion (133) comprises a plurality of connecting rods (1331), each of the connecting rod (1331) is arranged in a circumferential direction of the second absorber (12), each of the connecting rods (1331) is spaced apart from the second absorber (12), a gap between each of the connecting rods (1331) and the second absorber (12) forms the avoidance space (2).

7. The control rod absorber assembly according to claim 6, **characterized in that** the connecting rods (1331) are parallel to each other, and each of the connecting rods (1331) is perpendicular to the first stress member (131) and the second stress member (132); or
the connecting rods (1331) are intersected with each other and are arranged in a grid pattern.

8. The control rod absorber assembly according to claim 6, **characterized in that** the two adjacent connecting rods (1331) are arranged at the same interval.

9. The control rod absorber assembly according to claim 5, **characterized in that** at least one of the first stress member (131), the second stress member (132), and the connecting portion (133) is provided with an accommodating portion for accommodating gas and/or accommodating an expanded portion of the second absorber (12).

10. The control rod absorber assembly according to claim 6, **characterized in that** at least one of the first stress member (131) and the second stress member (132) is provided with an accommodating portion for accommodating gas and/or accommodating an expanded portion of the second absorber (12).

11. The control rod absorber assembly according to claim 9 or 10, **characterized in that** the accommodating portion comprises one or more openings (14), the openings (14) in the first stress member (131) and the second stress member (132) have a size less than a radial size of the second absorber (12).

12. The control rod absorber assembly according to claim 11, **characterized in that** when the accommodating portion comprises multiple openings (14), the multiple openings (14) are arranged at uniform intervals.

13. The control rod absorber assembly according to claim 2, **characterized in that** the first stress member (131), the second stress member (132), and the connecting portion (133) are made of stainless steel, and the connecting portion (133) is welded to the first stress member (131) and the second stress member (132), respectively.

14. The control rod absorber assembly according to claim 1, **characterized in that** the first absorber (11) and the second absorber (12) are each a continuously arranged absorbing rod; or
the first absorber (11) and the second absorber (12) are each an absorbing rod formed by a number of split rods arranged axially; or
the first absorber (11) and the second absorber (12) are each an absorbing column formed by a number of pellets stacked axially.

15. A control rod, **characterized in that** it comprises a cladding tube (31), a first end plug (32), a second end plug (33), a second compression spring (34), and a control rod absorber assembly (1) according to any one of the above claims 1-14;
the control rod absorber assembly (1) is provided in the cladding tube (31), and the first absorber (11) and the cladding tube (31) form an expansion gap (35) therebetween in the radial direction, the first end plug (32) and the second end plug (33) hermetically seal the two ends of the cladding tube (31), and the second compression spring (34) is provided between the first end plug (32) and the first absorber (11), such that the first absorber (11) is in abutting contact with the stress transfer assembly (13) and the stress transfer assembly (13) is in contact with the second end plug (33).

16. The control rod according to claim 15, **characterized in that** the stress transfer assembly (13) is provided in close contact with the second end plug (33).

17. A control rod assembly, **characterized in that** it comprises a plurality of control rods, at least one of the plurality of control rods employing a control rod (3) according to claim 15 or 16.
